# EUROPEAN PATENT APPLICATION

(11) **EP 2 704 443 A2**
(43) Date of publication of application: **05.03.2014**
(21) Application number: 13158462.5
(22) Date of filing: 08.03.2013
(51) Int. Cl.: H04N 21/2343, H04N 21/24, H04N 21/442, H04N 21/6379

(54) **Device for controlling streaming of media, server, receiver and method of controlling thereof**

(30) Priority: 31.08.2012 GB 201215573; 06.12.2012 KR 20120141268
(71) Applicant: Samsung Electronics Co., Ltd, Gyeonggi-do 443-742 (KR)
(72) Inventor: Redelinghuys, Ferdinand Christiaan, Middlesex, TW18 4QE (GB)
(74) Representative: Hewett, Jonathan Michael Richard

(57) **Abstract**

Methods, apparatuses and computer programs for controlling the provision of media from a server to a receiver. The media divided into portions, with each portion having different versions with different encoding bit rates. These versions are each available from the server. A first value indicative of a first bit rate and second values indicative of a ranking for the portions are used to select different encoding bit rates the portions, after which the portions corresponding to the selected encoding bit rates are provided to the receiver from the server.

## Description

The present invention relates to methods, apparatus and computer programs for controlling the streaming of media from a server to a receiver.

Media, such as audio and/or video, is increasingly being distributed over computer networks from servers to receivers. Media files may be downloaded, that is they are received in their entirety by the receiver before playback. Alternatively, media files may be streamed, which is where playback on the receiver starts before the media stream, as a whole, is received from the server. Streaming enables the media playback to begin almost instantaneously after the media stream is requested from the server by the receiver. However it requires the connection between the server and receiver to have a sufficiently high bandwidth to enable streaming without the media pausing.

Media distributed over a network is typically encoded. This encoding can be done at any one of a number of encoding bit rates. There is typically a trade off between the encoding bit rate and the quality of the media when it is played by the receiver. A low bit rate enables the media to be streamed over a low speed connection, and equally provides a small overall file size; however the media will be at a low quality. Equally a high bit rate, while providing high quality, requires a high connection bandwidth for streaming and provides a large overall file size.

Whether downloading or streaming, there will typically be an optimal bit rate for the media. This optimal bit rate may take into account a number of factors, including the bandwidth of the connection - especially in the case of streaming - and the overall desired file size, which is determined by the encoding bit rate of the media. In effect, the optimal bit rate represents the best use of the available network resources. For example, when streaming media to a mobile device over a cellular connection both the network bandwidth and any network data allowances must be taken into account.

As mentioned above, the media may be available at a number of different encoding bit rates. This enables a receiver to select a bit rate which approximately matches the determined optimal bit rate. However, there will typically be only a small number, for example 2 to 5, of encoding bit rates available. Therefore there will almost always be a difference between any given one of the available encoding bit rates and the optimal bit rate. This means that the available network resources will not always be used efficiently.

In accordance with at least one embodiment of the invention, methods, devices, systems and software are provided for supporting or implementing functionality to provide media to a receiver.

This is achieved by a combination of features recited in each independent claim. Accordingly, dependent claims prescribe further detailed implementations of the present invention.

According to a first aspect of the invention there is provided an apparatus for controlling the provision of media from a server to a receiver, the media comprising a plurality of portions, multiple versions of at least some of the portions being available from the server at different, predetermined, encoding bit rates, the apparatus comprising a processing system arranged to: determine a first value indicative of a first bit rate; receive a plurality of second values indicative of a ranking for at least some of the portions; select different encoding bit rates for at least some of the portions using both the first and second values; and cause the versions of the portions corresponding to the selected encoding bit rates to be provided to the receiver from the server.

In the prior art, the receiver is limited to selecting one of a limited number of the available, predetermined encoding bit rates for the media. By contrast, according to embodiments, the processing system is able to select different encoding bit rates for at least some of the portions. This enables a greater range of bit rates to be selected for the media as a whole. Moreover, since the selection of encoding bit rates is done based on both the first bit rate and a ranking for the portions, the selection of bit rates can be controlled, to ensure that an appropriate bit rate is selected for a given portion.

In some prior art systems, upon a change such as in the bandwidth of the connection between the server and the receiver, the receiver may change the encoding bit rate used for the media. Such systems do not involve the use of a ranking to select an encoding bit rate, rather, such systems are purely reactive, and use the highest possible bit rate based upon the available bandwidth at the time.

It will further be appreciated that known variable bit rate encoding techniques do not teach the above. In these known techniques the media is encoded so as to maintain the average bit rate of the media stream at a predetermined target bit rate, with some parts of the media stream encoded at a higher bit rate and others at a lower bit rate. However, the selection of bit rates for each part is done at encoding, and therefore there is no teaching of having portions available at different predetermined encoding bit rates and of using a ranking in combination with the first bit rate to select one of these predetermined bit rates.

The first value may be determined based, at least, upon a limit for resources available for the provision of the media to the receiver. The first value may be determined based upon one or more of: available bandwidth on a connection between the server and the receiver; network restrictions on the total size of the media; user input selecting a bit rate for the media; user input selecting a total size for the media. The processing system may be arranged to cause a bandwidth of a connection between the server and the receiver to be measured whereby to determine the first value.

When only limited resources are available for the provision of the media to the receiver, for example a limit on the bandwidth or on the total size for the media then, by enabling a greater range of bit rates to be selected for the media as a whole, embodiments are able to better tailor the media to the limited conditions. In particular, embodiments are able to more efficiently use the limited resources to increase the effective bit rate and therefore the quality of the received media. If, for example, the bandwidth of the connection between the receiver and the server is a limiting factor, then this may be measured by, for example, testing the connection or sending data through the connection.

The processing system may be arranged to re-select encoding bit rates for at least one of the portions based upon a detection of a change in the first value.

Conditions may change, and therefore in embodiments of the invention, the first value may change and thus a re-selection of encoding bit rates may be performed. This may be done, for example, to account for a change in the available bandwidth.

The processing system may be arranged to select encoding bit rates for the portions such the effective bit rate of the media is aligned with the first bit rate. The processing system may be arranged to select encoding bit rates for the portions such the effective bit rate of the media is within a predetermined range of the first bit rate. The processing system may be arranged to select encoding bit rates for the portions such a difference between the effective bit rate of the media and the first bit rate is minimised. The effective bit rate may be an average of the selected encoding bit rates for the portions.

The processing system may ensure that the effective bit rate, which may be a measure of the long term bit rate at which the media will be received such as an average bit rate for the portions, is aligned with the first bit rate so as to most efficiently use the available resources. Various methods may be used to align the bit rates, such as selecting the portions so that the effective bit rate is within a desired range of the first bit rate, or minimising the difference between the effective bit rate and the first bit rate. In either case, additional conditions, such as ensuring the effective bit rate is below or above the first bit rate may be used. In some embodiments an iterative process may be used to select the bit rates.

The processing system may be arranged to select a relatively high bit rate for portions having a relatively high ranking, and a relatively low bit rate for portions having a relatively low ranking. The processing system may be arranged to select a bit rate which is higher than the first bit rate for at least a first of the portions having a relatively high ranking, and a bit rate which is lower than the first bit rate for at least a second of the portions having a relatively low ranking.

In embodiments, the ranking may be indicative of a relationship between quality and bit rate, such that a relatively high ranking is indicative of a portion for which a relatively large improvement in quality is provided by an increase in bit rate, and a relatively low ranking is indicative of a portion for which a relatively small improvement in quality is provided by an increase in bit rate.

In other embodiments, the ranking may be indicative of a relationship between quality and bit rate, such that a relatively high ranking is indicative of a portion for which a relatively high bit rate is required to provide a given quality level, and a relatively low ranking is indicative of a portion for which a relatively low bit rate is required to provide the same given quality level.

The ranking may be determined when the media is encoded.

There are often differences in the quality 'response' of portions of a media stream to the bit rate used to encode them. That is, some portions may have a relatively small loss in quality when a low bit rate (i.e. high compression) encoding is used. Other portions may have a relatively high loss in quality for the same low bit rate. Conversely, an increase in bit rate will provide a relatively small improvement in quality for some portions, and a relatively large improvement for other portions. As an example, a dynamic scene in a video stream will present a high loss in quality if a low bit rate is used, and thus a large improvement in quality if the bit rate is increased, whereas a relatively static scene will present a much lower loss in quality, and therefore less of an improvement if a higher bit rate is used.

Therefore, an advantage of embodiments is that the portions which will have a high increase quality for an increased bit rate can be provided with a high ranking, and portions which will have a low increase quality for an increased bit rate can be provided with a low ranking. This means that the high ranking portions, for which the improvements will be most significant, will be preferentially received at a higher bit rate.

Equally, the ranking may be based on a quality factor linking quality and bit rate. As such, the portions which have a low quality at a given bit rate will be preferentially increased in bit rate, and thus in quality. Other portions, which have a high bit rate despite the low bit rate may be reduced in bit rate. This may result in the quality of each of the portions converging, and therefore providing a more consistent playback. The ranking may be determined as the media is encoded, i.e. by looking at an output of the encoding algorithm.

The second values may be received from the server. The processing system may be arranged to send a playlist to the receiver, the playlist comprising data identifying the versions of the portions corresponding to the selected encoding bit rates.

According to a further aspect of the invention there is provided a server for streaming media, the server comprising the apparatus described above. According to a third aspect of the invention, there is provided a receiver for receiving media, the receiver comprising: the apparatus described above.

According to a further aspect of the invention there is provided a method for controlling the provision of media from a server to a receiver, the media comprising a plurality of portions, multiple versions of at least some of the portions being available from the server at different, predetermined, encoding bit rates, the method comprising: determining a first value indicative of a first bit rate; receiving a plurality of second values indicative of a ranking for at least some of the portions; selecting different encoding bit rates for at least some of the portions using both the first and second values; and causing the versions of the portions corresponding to the selected encoding bit rates to be provided to the receiver from the server.

According to a further aspect of the invention there is provided a computer program product comprising a non-transitory computer-readable storage medium having computer readable instructions stored thereon, the computer readable instructions being executable by a computerized device to cause the computerized device to perform a method for controlling the provision of media from a server to a receiver, the media comprising a plurality of portions, multiple versions of at least some of the portions being available from the server at different, predetermined, encoding bit rates, the method comprising: determining a first value indicative of a first bit rate; receiving a plurality of second values indicative of a ranking for at least some of the portions; selecting different encoding bit rates for at least some of the portions using both the first and second values; and causing the versions of the portions corresponding to the selected encoding bit rates to be provided to the receiver from the server.

Further features and advantages of the invention will become apparent from the following description of preferred embodiments of the invention, given by way of example only, which is made with reference to the accompanying drawings.

A system for providing media will now be described as an embodiment of the present invention, by way of example only, with reference to the accompanying figures in which:
Figure 1 shows diagram of a system in which media may be provided from a server to a receiver;
Figure 2 shows a method for providing media according to one embodiment;
Figure 3 shows a method for providing media according to a further embodiment;
Figure 4 shows a method for selecting bit rates according to one embodiment; and
Figures 5 and 6 show a method for selecting bit rates according to a further embodiment.

Several parts and components of the invention appear in more than one Figure; for the sake of clarity the same reference numeral will be used to refer to the same part and component in all of the Figures.

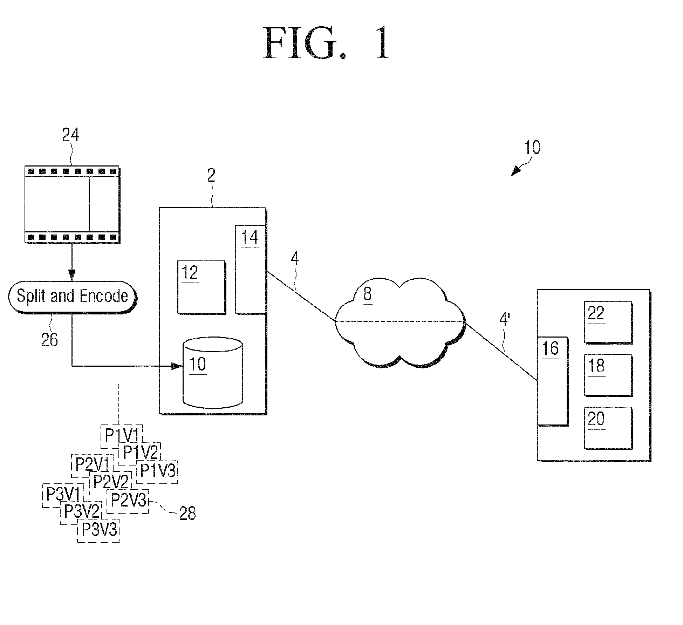

A system for providing media to a receiver in which embodiments of the invention may be used will now be described with reference to Figure 1. The system 1 comprises a server 2 connected via network connection 4 to a receiver 6. The network connection 4 passes through network 8.

The server 2 comprises a memory 10, a processing system 12 and a network interface 14. The memory 10 stores media, the processing system 12 controls how the media is provided from the server 2, and communications between the server 2 and the receiver 6 are conducted via the network interface 14.

The receiver 6 comprises an interface 16 through which the receiver 6 is connected to the network 8. The receiver further comprises a processor 18 connected to the interface. The processor 18 in turn is connected to a memory 20 and to media output unit 22.

The network 8 may be a private LAN, a public network such as the internet or a combination of the two. The network 8 may contain wireless elements; as such parts of the connection 4, for example the part referenced 4', may be wireless, according to e.g. the cellular (3G or LTE) or WiFi (802.11) standards.

In use, media, such as an audiovisual film 24, is split into portions and each portion is encoded as two or more versions, each version being encoded at a different bit rate. The splitting and encoding is represented by lozenge 26. The versions of the portions are then stored in the memory 10 of the server 2. This is represented by dashed boxes 28, where P1V2 means portion 1, version 2 etc.

When the media is to be provided from the server 2 to the receiver 6, data representing the desired versions of the portions of the media are retrieved from the memory 10 under the control of the processor 12 and transmitted on connection 4 via the interface 14. The data is routed via the network 8 to the receiver 2. At the receiver 2, the data is received by the interface 16. The data is then processed by the processing system 18. Some of the data may be stored in the memory 20, while other of the data may be directly played. To play the media, data which has been received and optionally stored in the memory 20 is processed, to e.g. decode the media and output via the output unit 22.

The output unit 22 may comprise an audio processing system, such as a digital analogue converter, amplifier and an audio output connection (such as a headphone or phono connection). The output unit 22 may comprise a video driver and output connection (such as HDMI, VGA, DVI or similar). The output unit may also comprise human interface elements, such as speakers for audio and a screen for visual media.

The media may be streamed by the receiver 6 from the server 2, or downloaded. Here, streaming is where the media is played before the downloading of the media is completed. By contrast, downloading is where the media is downloaded in its entirety before playback.

Network communications, and the storage, processing and output of media files are known in the art and therefore the detail of these operations will not be provided here.

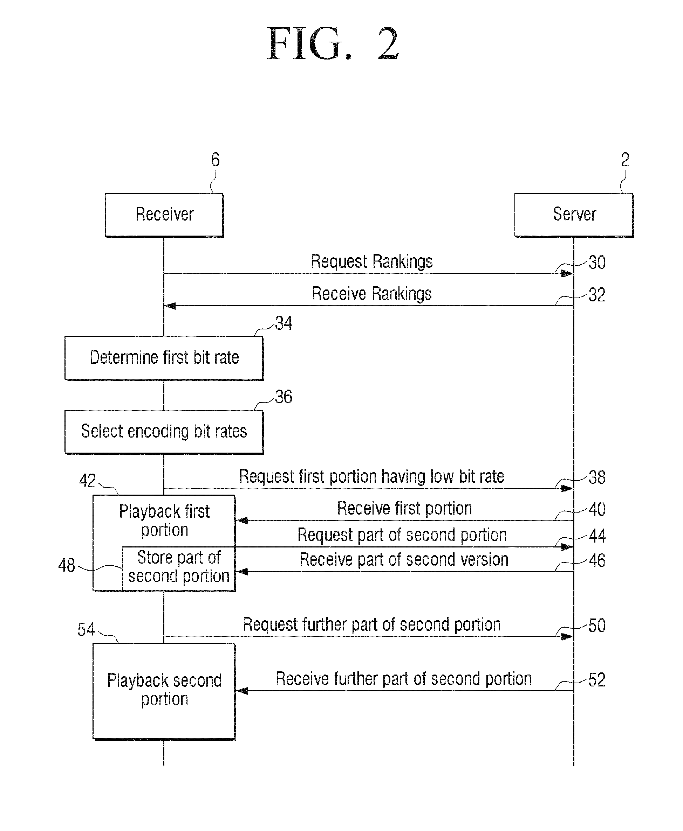

A method of providing media from the server 2 to the receiver 6 will now be described with reference to Figure 2. Prior to this method commencing, it will be assumed that any required steps to select a given media file will have been undertaken. For example, a user, operating receiver 2, may browse through a catalogue of media files, and select a desired one. The described method will be applied to a scenario in which the media is to be streamed from the server 2 to the receiver 6.

In step 30, the processing system 18 requests the rankings for the different portions of the media from the server 2. The rankings, or values indicative of the rankings, are received in step 32. The nature of the ranking will be described in more detail below. However, in simple terms, the rankings indicate to the receiver which portions should preferentially be received at a higher bit rate, and which should not.

In step 34, the processing system 18 of the receiver 6 determines a first bit rate for the media. In this embodiment this first bit rate may be taken to be indicative of a bit rate at which streaming will be possible. As such, the first bit rate may be determined by measuring the available bandwidth of the connection 4 between the receiver 6 and the server 2, and calculating the first bit rate as a function of the available bandwidth.

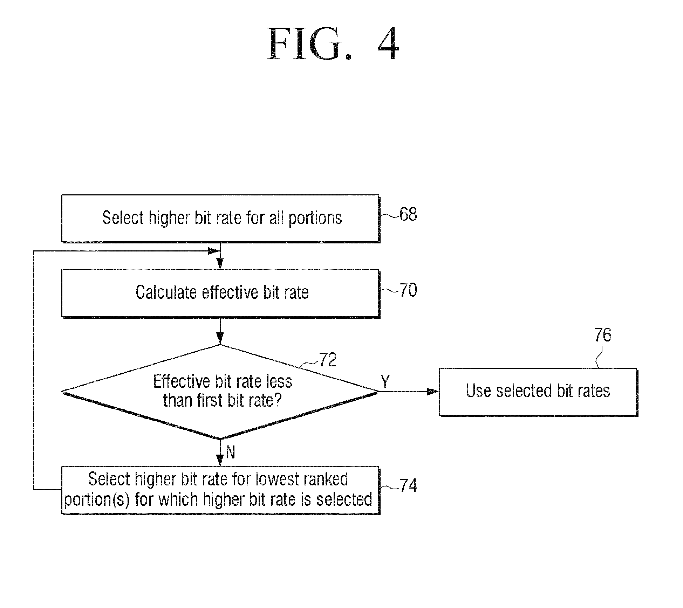

In step 36, the processing system 18 selects an encoding bit rate for each of the portions of the media using the rankings and the first bit rate. Methods by which this can be done are described in more detail in Figures 4 to 6. The next steps will be described based on the assumption that there are only two portions, and that in step 36, a relatively low bit rate is selected for a first portion, and a relatively high bit rate for a second portion. Moreover, in this embodiment, the relatively high bit rate exceeds the available bandwidth of the connection 4 between the receiver 6 and the server 2; that is the relatively high bit rate exceeds the first bit rate.

Steps 38 to 42 represent the streaming of the first portion. In step 38, the processing system 18 requests the first portion from the server 2. In step 40 the first portion is received, and in step 42 the first portion is played. Steps 40 and 42 may be ongoing throughout the playback of the first portion.

During the playback of the first portion, i.e. during the step 42, the processing system 18, in step 44, also requests a part of the second portion. This part of the second portion is received in step 46. The received part of the second portion is stored in memory 20, shown by step 48.

Subsequently, in steps 50 to 54, the second portion is streamed. This starts with the processing system 18 sending, in step 50, a request for a further part of the second portion. In this example, this further part represents the remaining part of the second portion which was not received in step 46. This further part is received in step 52. In step 54, the second portion is played. This involves retrieving from the memory the part which was stored in memory in step 48, and also using the further part which was received in step 52.

In summary, as the first portion is being streamed, the spare bandwidth is used to receive a part of the second portion, which has a bit rate too high to be directly streamed using the available bandwidth. Therefore, when the second portion is to be streamed, a part of the data is retrieved from memory, and a further part of the data is streamed (i.e. received during playback of the second portion). This enables the receiver to effectively stream the media despite the limitations on the available resources (i.e. bandwidth).

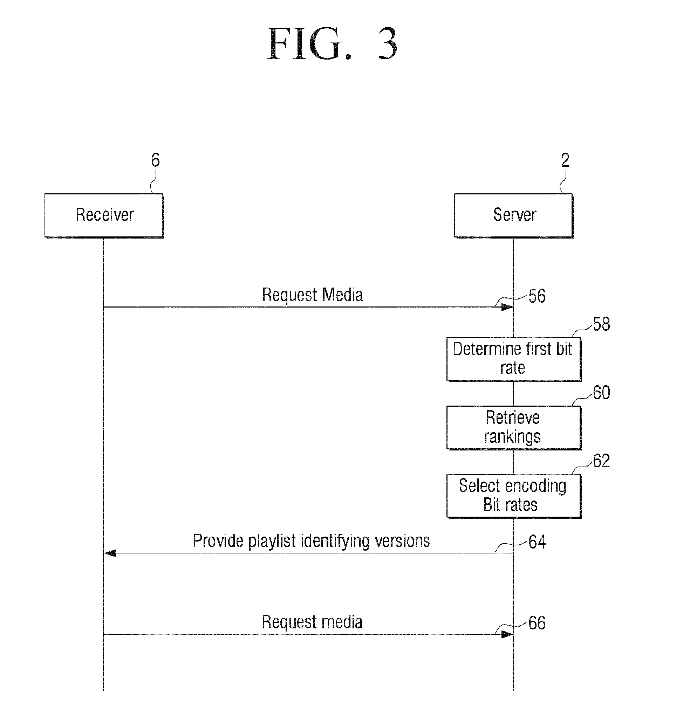

An alternative to the method described in Figure 2 will now be described with reference to Figure 3. This method is similar to that in Figure 2, with the selection of the bit rates being performed in the server. In step 56, the receiver 6 requests media from the server. In response to this request, in step 58, the processing system 12 of the server 2 determines the first bit rate. This may be done in an analogous manner to step 34 above, i.e. by testing the connection. Alternatively the receiver may provide an indication of the first bit rate in the request.

In step 60, the processing system 12 retrieves the rankings for the requested media from memory 10. These rankings, along with the first bit rate, are used by the processing system 12 in step 62 to select an encoding bit rate for the portions of the requested media.

Having selected encoding bit rates for the portions of the media in step 56, the processing system 12 of the server 2 causes the versions of the portions corresponding to the selected bit rates to be provided to the receiver 6 from the server 2. In this embodiment, as shown by step 64, a playlist identifying the versions of the portions corresponding to the selected bit rates is provided to the receiver 2. The playlist may, in step 66, be used by the receiver to request the appropriate portions of the media. As with the method in Figure 2, some of the portions may have encoding bit rates higher than the available bandwidth, and therefore parts of portions may be requested and received during the streaming of other portions.

It will be appreciated from the above description; apparatus within either the receiver or the server may select the bit rates for the portions. This apparatus may comprise the processing system 12 or 18 as applicable, and any memory, interfaces etc. as required. In some alternative embodiments, not illustrated in the Figures, the selection of bit rates for the portions may be performed by an apparatus separate from the server and receiver, for example a network control apparatus. This may be done to enable a network provider to limit the bandwidth provided to a receiver based on e.g. overall network conditions.

The benefits of the system described above are two-fold. First by downloading different portions at different bit rates there are more potential values for the effective bit rate of the media. Here the effective bit rate is an average, or long term, bit rate for the media. This can be demonstrated through an example. In this example the media is available in 5 equal length portions, each portion having two versions, one encoded at 10Mbps, the other encoded at 20Mbps. The first bit rate discussed above is determined to be 15Mbps. This may have been determined based on the maximum bandwidth of the connection, which in this example may have been 16Mbps.

In this scenario, a prior art system would be constrained to receiving the media at the lower bit rate throughout, i.e. at 10Mbps, as it is not able to stream the media at the higher 20Mbs. Throughout the streaming, there will therefore be at least 5Mbps of unused bandwidth.

By contrast an apparatus according to the above description may select an encoding bit rate of 10Mbps for some of the portions, and an encoding bit rate of 20Mbps for others of the portions. In particular, the bit rate for three of the portions may be selected to be 10Mbps, and the bit rate for the other two portions may be selected to be 20Mbps. This results in an average bit rate of 14Mbps, which is closer to the first bit rate of 15Mbps than the prior art. This in turn enables a more efficient use of the available bandwidth.

A second advantage comes from using rankings to select the bit rates for the portions. The inventor has recognised that different portions of media have different quality responses to the encoding bit rate. The quality response here indicates how much the quality of a portion varies with bit rate. In other words, how much quality is decreased by a decrease in bit rate, and equally how much the quality might be increased by an increase in bit rate. The difference in quality response is a result of the compression which is used to encode media.

While there are many causes of differing quality response, a simplified explanation for video data will be provided here. For video, two techniques are used together to compress the media, the first identifies and records the differences between frames, rather than encoding each frame separately; the second uses a lossy compression algorithm to compress the data further. Lossy compression deliberately simplifies the data, so as to be able achieve a desired compression. This simplification results in e.g. the blockiness seen in highly compressed video.

A relatively static portion of video media will have only small differences between consecutive frames. As such, a small amount of data is needed to record these small differences, and as such a large degree of compression may be achieved by this differencing alone. This in turn means that the lossy compression need not simplify the data as much to achieve a desired overall compression.

By contrast, a relative dynamic portion has large difference between consecutive frames, and so a large amount of data is required to record these differences. This means that only a small degree of compression is achieved through differencing the frames. This in turn means that the lossy compression must simplify the frames more to achieve the desired overall compression.

Therefore, for a given bit rate, a relatively static portion will be less simplified, and thus have a relatively higher quality; and a relatively dynamic portion will be more simplified and thus have a relatively lower quality. As a consequence, increasing the bit rate of the relatively static portion will result in a relatively small increase in quality, since there was less loss in quality to begin with; and increasing the bit rate of the relatively dynamic portion will provide a relatively large increase in quality, as there was more loss of quality to begin with. Therefore, it might be said that the quality response of the relatively dynamic portion is higher than the relatively static portion.

The quality response of a given portion, or more generally a ranking value derived using the quality response, may be used to identify those portions for which it is preferable to increase the bit rate. In increasing the bit rate of a portion with a high quality response, i.e. a dynamic portion, the overall quality of the media will be increased by more than if the bit rate was increased for a period with a low quality response (i.e. a static portion). Equally, the ranking may be used to identify portions for which a decrease in bit rate may be made without a large decrease in quality. In some embodiments, a decrease in bit rate for some portions may be used to offset an increase in bit rate for other portions.

Therefore the second advantage of the above methods is that, since the bit rate is increased for selected portions based on the provided rankings, the overall quality may be increased.

While the two advantages described above may be separated, they are particularly advantageous together, since not only is the resource utilisation increased (first advantage) but the increased usage of resources provides a greater effect than if, e.g. random portions were increased in bit rate (second advantage).

In conclusion, by selectively increasing the bit rate for portions of the media, and by targeting the increase in bit rate to those portions for which the effect on quality is greatest, embodiments are able to not only increase the utilisation the available resources, but substantially maximise the improvement in quality enabled by this increased utilisation.

It will be appreciated that the rankings described above may take many forms, and may be determined based on a number of factors. Furthermore, the first bit rate may be determined based on a number of different factors. Some examples are described below, with reference to Figures 4 to 6, and further examples are thereafter.

A method by which one of the processing systems 12 or 18 may select encoding bit rates for the portions of the media will now be described with reference to Figure 4. It is assumed that the first bit rate has been determined, and the rankings received by the processor prior to this method commencing.

In this example, the first bit rate is indicative of the available bandwidth. So as to maximise the utilisation of the available bandwidth, the objective here is to make the effective bit rate (e.g. the average bit rate of the portions as a whole) as close to the first bit rate as possible, while keeping it below the first bit rate.

In this method, there will only be two bit rates considered for the portions. The first is greater than the first bit rate, the second less than the first bit rate. In addition, each of the portions will have a unique ranking.

In step 68, the processing system initialises the selection procedure by selecting the higher encoding bit rate for all the portions. After this, the processing system will enter a loop defined by steps 70 to 74.

In step 70, the processing system will first calculate an effective bit rate for the media. As mentioned above, the effective bit rate may be calculated as the average bit rate for all the portions, each at the associated selected bit rate. Then in step 72, the effective bit rate is compared to the first bit rate. If the effective bit rate is greater than the first bit rate, in step 74, the processing system selects the lower encoding bit rate for the lowest ranked portion for which the higher bit rate is still selected. After this, the loop repeats with, in step 70, the effective bit rate being calculated again.

If, at step 72, it is determined that the effective bit rate is less than the first bit rate, the selected bit rates are, as shown by step 76, used for the provision of the media.

It will be appreciated that the method is illustrative and that more efficient systems may be used. Nevertheless the above method demonstrates the principle of how encoding bit rates may be selected for different portions of the media. In summary, the higher bit rate is selected for the relatively high ranked portions and the lower bit rate for the relatively low ranked portions. A ranking threshold is established to divide the relatively high ranked portions from the relatively low ranked portions. The threshold is selected so that the effective bit rate is less than the first bit rate.

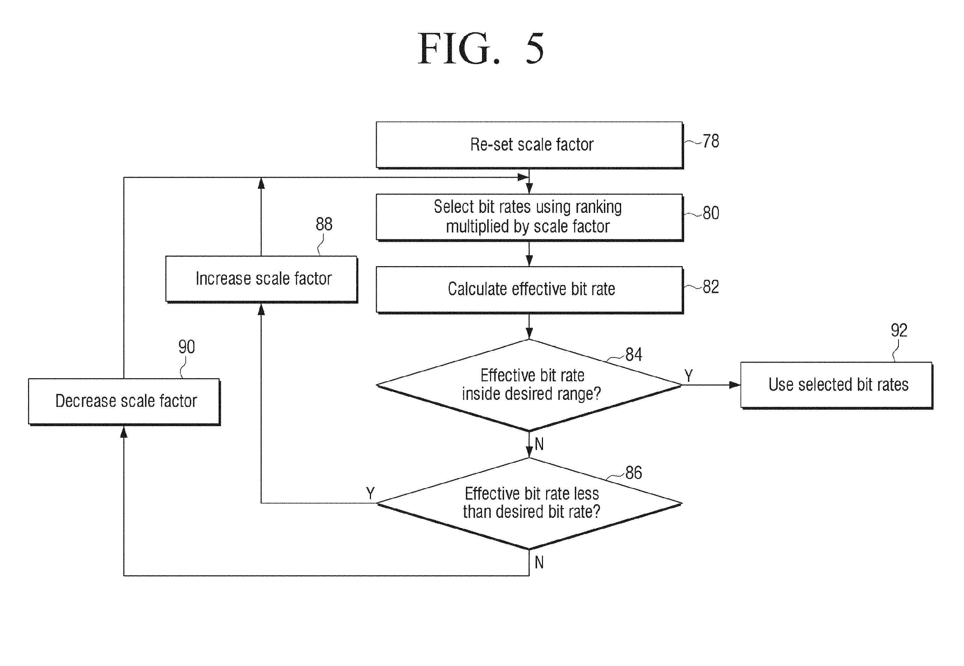

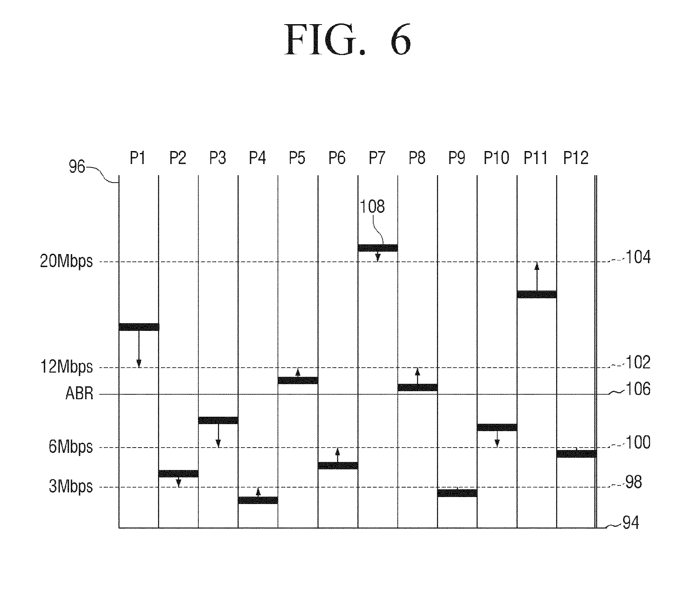

An alternative method for selecting encoding bit rates for portions of the media will now be described with reference to Figures 5 and 6. In this example, it will be assumed that there are more than two different encoding bit rates which are available and which may be used for the media. In addition, the rankings are represented by numeric values, of which there are a relatively large number of different values. As will be described in detail below, this method uses a scale factor to associate the rankings with a selected bit rate.

In a first, initialisation, step 78 the processing system will estimate a value for the scale factor. This may be done by dividing the first bit rate by an average ranking value of all the portions. Subsequently, in steps 80 to 90 the processing system uses the scaling factor to select the bit rates for each of the portions. In doing so the processing system may adjust the scaling factor, and therefore the bit rates.

In step 80, the bit rates for each of the portions are selected using the scale factor multiplied by the rankings. A method for doing this is illustrated in Figure 6 and will be described below.

In step 82, the selected bit rates are used to calculate the effective bit rate for the media. As with the description above, the effective bit rate may be the average of the selected bit rates of the portions. In step 84, the processor compares the effective bit rate to the first bit rate, in particular determining whether the effective bit rate is within a desired range of the first bit rate.

If the effective bit rate is not within the desired range, then in step 86, the processing system determines whether the effective bit rate is less than the desired bit rate. If the effective bit rate is less than the desired bit rate, then in step 88, the scale factor is increased, if not, then in step 90, the scale factor is decreased. The amount by which the scale factor is adjusted (e.g. increased or decreased) may be predetermined, or calculated using e.g. the difference between the effective bit rate and the first bit rate. Typically, the effect of increasing the scale factor is to increase the selected bit rate for at least one of the portions, and therefore increasing the effective bit rate. Equally, the effect of decreasing the scale factor is typically to decrease the selected bit rate for at least one of the portions, and therefore decreasing the effective bit rate.

After this altering of the scale factor, the processing system returns to step 80, where the bit rates are again selected, using the new scale factor, and the effective bit rate is calculated in step 82, and compared to the first bit rate in step 84.

If in step 84, the effective bit rate is within the desired range, then in step 92, the selected bit rates are used for the provision of the media.

A method of selecting bit rates using a scale factor will be described with reference to Figure 6. Figure 6 shows a plot showing the bit rate of twelve periods marked P1 to P12. The periods rates are arranged along the horizontal axis 94. The vertical axis 96 represents bit rate. Horizontal dashed lines 98, 100, 102 and 104 show the four available bit rates of 3, 6, 12 and 20Mbps respectively. A solid horizontal line 106 represents the first bit rate, at 10Mbps.

The interim value produced by multiplying the ranking by the scale factor is shown by bold, horizontal, black lines 108. As can be seen, each period has a different value for the associated interim value. Using the interim value, one of the four available encoding bit rates may be selected. This may be done, as shown in Figure 6, by selecting the nearest bit rate; however other techniques, such as selecting the next highest or next lowest bit rate may be used. For some of the periods, the selected bit rate is greater than the available bit rate, and for others of the periods, the selected bit rate is less than the available bit rate.

While not shown, it will be recognized that the effect of changing the scaling factor will be to change all of the interim values. While the selected bit rate for many of the periods will not change, those which are near to the cut off between two available encoding bit rates, may change, thereby changing the effective bit rate of the media as a whole.

When selecting a bit rate based on the interim value, the relevant processing system may take other considerations into account. For example, should the selected bit rate for the first period (P1) be e.g. 20Mbps then the processing system may decide to reduce the effective bit rate to e.g. 12Mbps so that less buffering is required before playback can be started.

Similar adjustments may be made for other periods, for example if a later period has a high selected bit rate, the processing system may determine whether it will be possible for the receiver to receive sufficient data, during the streaming of the earlier periods, to enable streaming of this later period. If not, then the processing system may either reduce the bit rate of the later period, or reduce the bit rate of one or more earlier periods to create capacity. For example, the period P7 has a high bit rate of 20Mbps. If it is not possible to receive enough data, the processing system may reduce the bit rate of e.g. period P6, which is currently shown at 6Mbps, to 3Mbps to free up bandwidth on the connection. P6 may be chosen as it is close to the cut off between the two bit rates of 3Mbps and 6Mbps.

Further adjustments may be made based on e.g. the memory size of the receiver. For example, in a given media file, the high ranking (high bit rate) portions may be biased towards the end of the media. While the early part of the media may be used to download the additional data required to play the high bit rate later portions, it may be impractical. In such cases, the earlier portions may have a slightly higher bit rate selected for them and the later bit rates may have a slightly lower bit rate selected, to reduce the amount of data needing to be stored in the buffer, while still providing a high, although not maximal, quality.

The above method is an example of how a relatively large number of bit rates can be selected for media, using a relatively large number of rankings. It is in effect an iterative process for matching rankings with bit rates until a desired effective bit rate is achieved.

It will be appreciated that once the bit rates for the portions have been identified, there are a number of methods by which they can be requested and received by the receiver. For example, in line with the description relating to Figure 2 above, parts of portions having a high bit rate may be downloaded alongside portions having a low bit rate.

However, in alternative embodiments, each portion as a whole could simply be requested in order. Each portion would be stored in the memory 20 of the receiver 2 as it is received, and retrieved for playback. This has the advantage that the selected versions of the portions of the media may be selected by e.g. the server or a further apparatus separate from the server and receiver, and a receiver capable of playlisted playback will be able to play media without substantial modification.

Two examples of ranking have been provided, in the first the ranking was a unique value indicative of a preference order for increasing the bit rate of associated portion of the media. In the second the ranking was indicative of a relative bit rate, which was converted into an actual bit rate using a scale factor. It will be apparent that other forms of ranking may be used, and the type of ranking will depend upon the algorithm used to select the encoding bit rates for the portions.

As such, in some embodiments, the ranking may be one of a relatively limited number of levels, such as a value from 1 to 5. Other embodiments, this ranking may take a larger number of levels, i.e. 100 256 (2⁸) or higher. The rankings may be represented by an integer, or by a floating point number. In some embodiments, as described above, each portion may be given a unique ranking.

The rankings may be calculated during the encoding of the media, for example by looking at the degree of lossy compression required to achieve the encoding bit rate, or by directly calculating a factor based upon analysis of the portions of the media. Other factors may be taken into account, such as the overall scene contrast - where high contrast makes a high compression more obvious and vice versa.

Quality, as used herein, may describe one or more properties of the media, and as such may be measured in a number of ways. For example, quality may be objectively measured by comparing the peak signal to noise ratio of the original media to the decoded media as played by the receiver. Quality may be determined by determining the degree of loss applied by a lossy compression algorithm. In some embodiments, quality may be subjectively measured by making use of user input. As such, users may gauge the perceived quality of the portions of the media based on bit rate, and provide a quality opinion score. A ranking may be subsequently derived from an average quality opinion score, such as a mean or median score, or modal class of the scores.

In this description, the different versions have been differentiated only by bit rate. Bit rate may be varied by varying the compression factor of a given portion of media. However alternative method, such as changing the resolution may be used.

In some embodiments, some versions may be available to certain receivers, while others are available to other receivers. This may be determined based e.g. upon the capabilities of the receiver.

In some embodiments, user preferences may be used to change how rankings are used to select bit rate. For example a first user may be less concerned by having high quality dynamic scenes, and would prefer more detail in the static scenes; while a second use would like the reverse. Therefore, user input may provide an input to the selection of the bit rates.

The above description assumed that the selection of bit rates was performed before the media was provided to the receiver. This may not be the case and in some embodiments, the process of selecting bit rates may be ongoing, based on e.g. the resources currently available, such as bandwidth. In other words, should the first bit rate change, based on e.g. a change in bandwidth, then the selection of bit rates for at least some of the portions may be redone.

In some embodiments, the selection of bit rates may only be performed for a part of the media. For example, bit rates may be selected for a given number of portions, and as these portions are played, the selection of bit rates for later portions may be performed.

In some embodiments, certain portions may be available at only a single bit rate. That is, only some of the portions may have multiple versions. In these cases the fixed bit rate portions will be received at the fixed bit rate, and the other portions will have bit rates selected for them. This may be done to reduced the computational difficulty of selecting bit rates. For example, in one embodiment, the bit rate for a number of portions may be fixed at a low bit rate, and the higher bit rate may be an option for a limited number of other portions.

The first bit rate was described above in relation to the available bandwidth of the connection 4. Here, available bandwidth may simply mean the maximum throughput of the connection. However, it may also take into account other factors, such as whether the connection is being shared with other devices or applications, and/or the variability of the bandwidth on the connection. Furthermore, while the available bandwidth is one consideration in determining the first bit rate, as media cannot be streamed when the media bit rate exceeds the bandwidth of the connection, it is not the only consideration and other factors may be used in addition, or instead.

For example, there may be network restrictions on the total amount of media data which can be received by the receiver. This is particularly significant when the media is to be received over a cellular connection as many networks have data limitations. A measure of the total size of the media may be used to determine the first bit rate by dividing the total size by the length of the media. As an alternative, a user may wish to specify a particular bit rate or total size.

In some embodiments, a network may wish to specify the first bit rate. This may be done to reduce congestion. In such embodiments, the apparatus which selects the bit rates for the portions of the media may be in a network apparatus, separate from the receiver or the server.

It will be appreciated here that server refers to any device capable of providing the media to the receiver. The server may be a single device, or exist as a distributed system e.g. as cloud storage. In some embodiments, the server may be a local device; that is a device on a home network - for example the server may be a home network attached storage (NAS) device, or even a home computer set up to provide media to connected devices on a home network.

The receiver is equally any client device capable of receiving media. Examples of receivers include, but are not limited to, computers, televisions, set-top-boxes, smartphones, tablet computers, laptops and PDAs.

Overall, the selection of bit rates may be performed by any apparatus, whether a part of the receiver, the server, or a further entity, separated from the two.

The media may be divided, encoded and stored on the server in a number of predetermined versions by a packager. However, in alternative embodiments, the media may be stored in e.g. one version, and one or more transcoders may be provided to transcode the media into the plurality of available bit rates. In these embodiments, the transcoders may be pre-set to specific, available, bit rates, to which the selected bit rates correspond.

In the above, the periods were shown having a preset length. This may not be the case, and the periods may be defined by e.g. the different scenes in the media. As such the periods may be of varying length.

It is to be understood that any feature described in relation to any one embodiment may be used alone, or in combination with other features described, and may also be used in combination with one or more features of any other of the embodiments, or any combination of any other of the embodiments. Furthermore, modifications not described above may also be employed without departing from the scope of the invention, which is defined in the accompanying claims. The features of the claims may be combined in combinations other than those specified in the claims.

## Claims

1. An apparatus for controlling provision of media from a server to a receiver, the media comprising a plurality of portions encoded in at least two versions, and the versions of at least some of the portions being available from the server at different, predetermined, encoding bit rates, the apparatus comprising:
a processing system which determines a first value indicative of a first bit rate; and
an interface which receives a plurality of second values indicative of a ranking for at least some of the portions,
wherein the processing system selects different encoding bit rates for at least some of the portions using both the first value and the second value, and causes the versions of the portions corresponding to the selected encoding bit rates to be provided to the receiver from the server.

2. The apparatus of claim 1, wherein the first value is determined based, at least, upon a limit for resources available for the provision of the media to the receiver.

3. The apparatus of claim 1 or 2, wherein the first value is determined based upon at least one of available bandwidth on a connection between the server and the receiver, network restrictions on a total size of the media, user input selecting a bit rate for the media, and user input selecting a total size for the media.

4. The apparatus of claim 1 or 2, wherein the processing system is arranged to cause a bandwidth of a connection between the server and the receiver to be measured whereby to determine the first value.

5. The apparatus of claim 1 or 2, wherein the processing system is arranged to re-select encoding bit rates for at least one of the portions based upon detection of a change in the first value.

6. The apparatus of claim 1, wherein the processing system is arranged to select encoding bit rates for the portions such an effective bit rate of the media is aligned with the first bit rate.

7. The apparatus of claim 6, wherein the processing system is arranged to select encoding bit rates for the portions such the effective bit rate of the media is within a predetermined range of the first bit rate.

8. The apparatus of claim 6, wherein the processing system is arranged to select encoding bit rates for the portions such a difference between the effective bit rate of the media and the first bit rate is minimized.

9. The apparatus of any one of claims 6 to 9, wherein the effective bit rate is an average of the selected encoding bit rates for the portions.

10. The apparatus of claim 1, wherein the processing system is arranged to select a relatively high bit rate for portions having a relatively high ranking and a relatively low bit rate for portions having a relatively low ranking.

11. The apparatus of claim 1 or 2, wherein the processing system is arranged to select a bit rate which is higher than the first bit rate for at least a first of the portions having a relatively high ranking, and a bit rate which is lower than the first bit rate for at least a second of the portions having a relatively low ranking.

12. The apparatus of claim 1 or 2, wherein the ranking is indicative of a relationship between quality and bit rate, such that a relatively high ranking is indicative of a portion for which a relatively large improvement in quality is provided by an increase in bit rate, and a relatively low ranking is indicative of a portion for which a relatively small improvement in quality is provided by an increase in bit rate.

13. The apparatus of claim 1 or 2, wherein the ranking is indicative of a relationship between quality and bit rate, such that a relatively high ranking is indicative of a portion for which a relatively high bit rate is required to provide a given quality level, and a relatively low ranking is indicative of a portion for which a relatively low bit rate is required to provide the same given quality level.

14. A server for streaming media, the media comprising a plurality of portions encoded in at least two versions, and the versions of at least some of the portions being available from the server at different, predetermined, encoding bit rates, the server comprising:
a memory which stores a second value indicative of the version information and a ranking of a portion; and
a processing system which determines a first value indicative of a first bit rate and searches a plurality of the second values indicative of a ranking for at least some of the portions,
wherein the processing system selects different encoding bit rates for at least some of the portions using both the first value and the second value, and causes the versions of the portions corresponding to the selected encoding bit rates to be provided to the receiver from the server.

15. A receiver which receives media, the media comprising a plurality of portions encoded in at least two versions, and the versions of at least some of the portions being available from the server at different, predetermined, encoding bit rates, the receiver comprising:
a processing system which determines a first value indicative of a first bit rate;
an interface which receives a plurality of second values indicative of a ranking for at least some of the portions,
wherein the processing system selects different encoding bit rates for at least some of the portions using both the first value and the second value, and causes the versions of the portions corresponding to the selected encoding bit rates to be provided to the receiver from the server.
